# EUROPÄISCHE PATENTSCHRIFT

(11) **EP 3 096 982 B1**
(45) Veröffentlichungstag und Bekanntmachung des Hinweises auf die Patenterteilung: **11.04.2018**
(21) Anmeldenummer: 15700743.6
(22) Anmeldetag: 21.01.2015
(51) Int. Cl.: B60R 11/00

(54) **BEFESTIGUNGSEINRICHTUNG ZUM LÖSBAREN ANBRINGEN EINER VORRICHTUNG AN ZWEI BEABSTANDETEN KOPFSTÜTZENSTANGEN EINES KRAFTFAHRZEUGSITZES**
FIXING DEVICE FOR DETACHABLY ATTACHING A DEVICE TO TWO SPACED HEADREST RODS OF A MOTOR VEHICLE SEAT
DISPOSITIF DE FIXATION POUR FIXER DE FAÇON AMOVIBLE UN DISPOSITIF À DEUX TIGES ESPACÉES D'UN APPUI-TÊTE DE SIÈGE DE VÉHICULE AUTOMOBILE

(30) Priorität: 21.01.2014 CH 87142014
(43) Veröffentlichungstag der Anmeldung: 30.11.2016
(73) Patentinhaber: Kinetix AG, 8750 Glarus (CH)
(72) Erfinder: ACKERET, Peter, CH-8048 Zürich (CH); KELLER, Michael Andreas, 72250 Freudenstadt (DE)
(74) Vertreter: DREISS Patentanwälte PartG mbB
(86) Internationale Anmeldenummer: PCT/EP2015/051134
(87) Internationale Veröffentlichungsnummer: WO 2015/110468

(56) Entgegenhaltungen:
- DE-A1-102009 030 895
- GB-A- 2 448 958
- US-A1- 2011 155 873

## Beschreibung

Die Erfindung betrifft eine Befestigungseinrichtung zum lösbaren Anbringen einer Vorrichtung wie zum Beispiel eines Kleiderbügels, eine Vorrichtung zum Aufhängen von Gegenständen, eines Tischs, eines Monitors und dergleichen an zwei beabstandeten Kopfstützenstangen eines Kraftfahrzeugsitzes.

Eine solche Befestigungseinrichtung ist von der Anmelderin in der DE 10 2009 030 895 beschrieben worden, auf die verwiesen wird. Aus der GB 2 448 958 A ist eine Befestigungseinrichtung mit Merkmalen des Oberbegriffs des Anspruchs 1 bekannt.

Die dort beschriebene Befestigungseinrichtung umfasst eine in etwa mittig zwischen den beiden Kopfstützenstangen angeordnete Aufnahmebuchse zur Aufnahme eines an der Vorrichtung angeordneten Steckelements und eine manuell lösbare Verriegelungsvorrichtung die das Steckelement in der Aufnahmebuchse arretiert sowie erste und zweite Befestigungselemente mit denen die Aufnahmebuchse an den Kopfstützenstangen befestigbar ist, wobei das erste und das zweite Befestigungselement an zwei gegenüber liegenden Seiten an den Kopfstützenstangen anliegen und mit Verbindungsmitteln - vorzugsweise Schraubverbindungen - gegen die Kopfstützenstangen vorgespannt werden.

Mit der beschriebenen Befestigungseinrichtung wird zwar eine stabile Befestigung der Vorrichtung an den Kopfstützenstangen erreicht, doch kann die fest mit den Kopfstützenstangen verbundene Befestigungseinrichtung ein Absenken der Kopfstütze behindern oder gar blockieren, was die Sicherheit der Personen auf dem entsprechenden Kraftfahrzeugsitz gefährden kann.

Aufgabe der vorliegenden Erfindung ist die Schaffung einer Befestigungseinrichtung zum lösbaren Anbringen einer Vorrichtung an zwei beabstandeten Kopfstützenstangen eines Kraftfahrzeugsitzes, die eine stabile Befestigung der Vorrichtung an den Kopfstützenstangen gewährleistet, ohne die Verstellbarkeit der Kopfstütze einzuschränken.

Diese Aufgabe wird erfindungsgemäss durch eine Befestigungseinrichtung zum lösbaren Anbringen einer Vorrichtung an zwei beabstandeten Kopfstützenstangen eines Kraftfahrzeugsitzes mit den Merkmalen des Anspruchs 1 gelöst. Weiterbildungen der Erfindung sind in den abhängigen Ansprüchen definiert.

Gemäß der Erfindung ist insbesondere möglich, dass bei an den Kopfstützenstangen angeordneten Befestigungselementen die Gleitelemente über die Befestigungselemente gegen die Kopfstützenstangen derart beaufschlagt werden, dass die Befestigungseinrichtung zum einen in ihrer Lage an den Kopfstützenstangen gehaltert und zum anderen eine händische oder elektromotorische Verschiebung der Befestigungseinrichtung entlang den Kopfstützenstangen ermöglicht ist. Die Befestigungselemente können also zur Bereitstellung einer Haltekraft gegen die Gleitelemente wirken, wobei die Gleitelemente dann mit der Haltekraft gegen die Kopfstützenstangen beaufschlagt werden. Die Haltekraft und der Reibungskoeffizient zwischen den Gleitelementen und den Kopfstützenstangen kann dabei vorzugsweise so gewählt werden, dass die Befestigungseinrichtung zum einen in ihrer vertikalen Lage an den Kopfstützenstangen verrutschsicher gehaltert und zum anderen dennoch eine händische oder elektromotorische Verschiebung der Befestigungseinrichtung in Richtung der Längsachse der Kopfstützenstangen, also in vertikaler Richtung, ermöglicht ist.

Die Befestigungselemente können unmittelbar oder mittelbar gegen die Gleitelemente wirken; im Rahmen der Erfindung können insbesondere auch Zwischenelemente zwischen den Befestigungselementen und den Gleitelemente vorgesehenen sein. Diese Zwischenelemente können beispielsweise Federelemente zur Unterstützung und/oder Bereitstellung der Haltekraft sein.

Durch das Vorsehen der Gleitelemente zwischen den beiden Befestigungselementen und den Kopfstützenstangen sind sowohl eine stabile Verbindung als auch die vertikale Verschiebbarkeit der Befestigungseinrichtung an den Kopfstützenstangen gewährleistet.

Vorteilhafte Ausgestaltungen der Erfindung können sich insbesondere dadurch ergeben,
- dass sich beide Befestigungselemente in Querrichtung zu den Kopfstützenstangen über die Kopfstützenstangen hinaus erstrecken und an jedem Befestigungselemente zwei Gleitelemente angeordnet sind;
- dass die gegen die Kopfstützenstangen gerichteten Gleitflächen der Gleitelemente die Kopfstützenstangen in etwa hälftig umgreifen;
- dass die Gleitflächen der Gleitelemente einen halbkreisförmigen Querschnitt aufweisen;
- dass die Gleitflächen von jeweils zwei gegeneinander gerichteten Gleitelementen die Kopfstützenstangen gemeinsam rohrförmig umschliessen;
- dass die Gleitelemente zur Anpassung an unterschiedliche Abstände der Kopfstützenstangen parallel zu einer horizontalen Verbindungslinie zwischen den beiden Kopfstützenstangen beweglich in den Befestigungselementen gelagert sind;
- dass die Gleitelemente in Längsführungen in den Befestigungselementen geführt sind;
- dass die Schraubverbindungen zwischen der Aufnahmebuchse und den Gleitelementen angeordnet sind;
- dass Anschläge vorgesehen sind, welche die beiden Befestigungselemente beim Verschrauben so gegeneinander abstützen, dass keine Kräfte auf die Gleitelemente einwirken, die den Lauf der Gleitelemente auf den Kopfstützenstangen blockieren;
- dass auf den Innenseiten der beiden Halbschalen Aufnahmen für die Gleitelemente vorgesehen sind;
- dass die gegeneinander gerichteten Stirnkanten der beiden Halbschalen fluchtend aufeinander stossen, wobei auf den Ober- und Unterseiten der Halbschalen Stangenausnehmungen für die Kopfstützenstangen freigespart sind;
- dass die Aufnahmebuchse auf der Innenseite der ersten Halbschale angeordnet ist und auf der Innenseite der zweiten Halbschale eine kastenförmige Abstützung zum Abstützen der Aufnahmebuchse vorgesehen ist; und/oder
- dass ein, vorzugsweise seitlich verschiebbarer und federvorgespannter, Verschluss- Schieber vorgesehen ist, der die an der Frontseite der ersten Halbschale angeordnete Einstecköffnung der Aufnahmebuchse verschliesst, wenn kein Steckelement in die Aufnahmebuchse eingesteckt ist.

Weitere Vorteile und Ausgestaltungen der Erfindung ergeben sich aus der Beschreibung und den beiliegenden Zeichnungen.

Es versteht sich, dass die vorstehend genannten und nachstehend noch zu erläuternden Merkmale nicht nur in den jeweils angegebenen Kombinationen sondern auch in anderen Kombinationen oder in Alleinstellung verwendbar sind, ohne den Rahmen der vorliegenden Erfindung zu verlassen.

Die Erfindung wird nachstehend anhand von bevorzugten Ausführungsbeispielen unter Bezugnahme auf die zugehörigen Zeichnungen näher erläutert.
Fig. 1 zeigt die Befestigungseinrichtung angebracht an den beiden Kopfstützenstangen eines Fahrzeugsitzes in einer Ansicht von hinten, mit einem Verschluss- Schieber zum Verschließen der Öffnung der Aufnahmebuchse in der geschlossenen Stellung.
Fig. 2 zeigt eine Längsschnittansicht der Befestigungseinrichtung, verschraubt an den beiden Kopfstützenstangen eines Fahrzeugsitzes mit einer mit einem Steckelement versehenen Vorrichtung, eingesteckt und verriegelt in der Aufnahmebuchse der Befestigungseinrichtung.
Fig. 3 zeigt eine teilweise freigeschnittene Perspektivansicht einer an den beiden Kopfstützenstangen angebrachten Befestigungseinrichtung.
Fig. 4 zeigt eine Perspektivansicht einer an den beiden Kopfstützenstangen angeschlossenen Befestigungseinrichtung.
Fig. 5 zeigt eine Detailansicht der Befestigung der Befestigungseinrichtung an einer Kopfstützenstange in einem Längsschnitt.
Fig. 6 zeigt eine Explosionsansicht der Befestigungseinrichtung mit zwei Kopfstützenstangen.

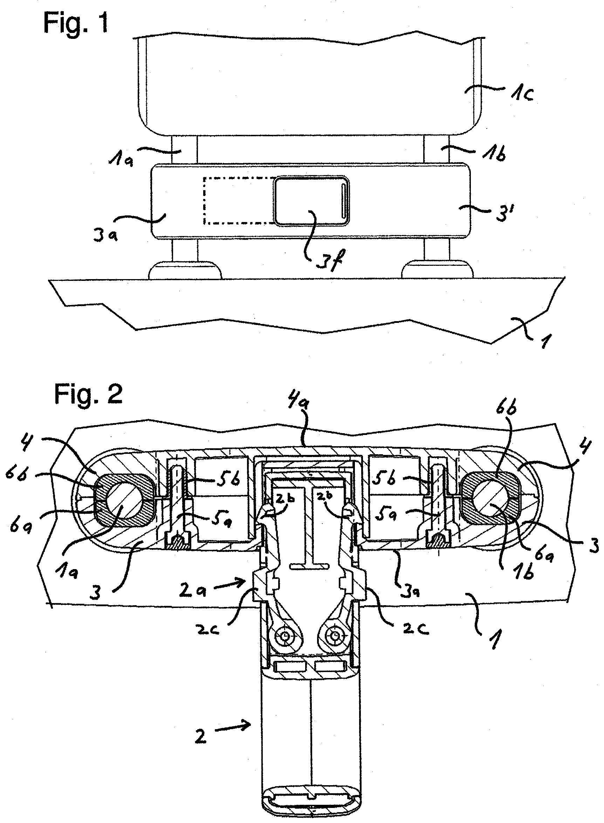

Fig. 1 zeigt die Befestigungseinrichtung angeschlossen an den beiden Kopfstützenstangen 1a, 1b, welche die Rückenlehne des Fahrzeugsitzes 1 mit der Kopfstütze 1c verbinden.

Das erste und das zweite Befestigungselemente 3, 4 sind auf zwei gegenüberliegenden Seiten der Kopfstützenstangen 1a, 1b angeordnet und überragen diese seitlich (Fig. 2).

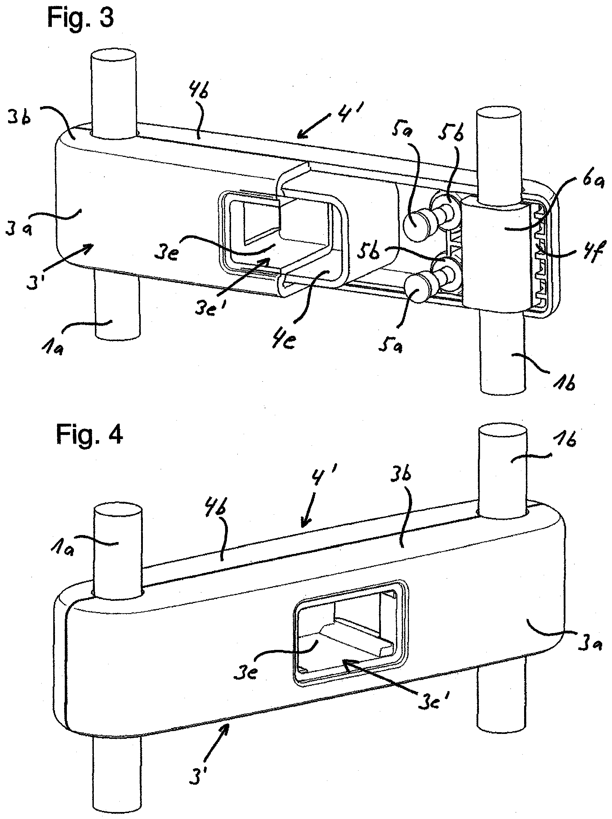

Mittig zwischen den Kopfstützenstangen 1a, 1b ist die Aufnahmebuchse 3e angeordnet, die ein Teil des ersten Befestigungselement 3 bildet und in einer am zweiten Befestigungselemente 4 angeordneten kastenförmigen Abstützung 4e aufgenommen wird (Fig. 3).

Die Einstecköffnung 3e' der Aufnahmebuchse 3e fluchtet mit der Frontseite 3a des ersten Befestigungselements 3 (Fig. 4) und wird mit einem seitlich verschiebbaren federbeaufschlagten Verschluss- Schieber 3f verschlossen (Fig.1).

Das an der Vorrichtung 2 (hier in Form eines Universalhakens zum Aufhängen von Taschen) angeordnete Steckelement 2a wird nach öffnen des Verschluss- Schiebers 3f durch die Einstecköffnung 3e' in die Aufnahmebuchse 3e eingesteckt und mit den Verschlusshaken 2b in der Aufnahmebuchse 3e verriegelt. Zum Lösen der Verriegelung werden die seitlich am Steckelement 2a angeordneten Lösetasten 2c gedrückt und das Steckelement 2a mit der Vorrichtung 2 aus der Aufnahmebuchse 3e herausgezogen (Fig. 2).

Im Bereich der Kopfstützenstangen 1a, 1b sind an den Befestigungselementen 3, 4 gegen die Kopfstützenstangen 1a,1b offene Aufnahmen 3g, 4f vorgesehen in denen die Gleitelemente 6a, 6b aufgenommen sind.

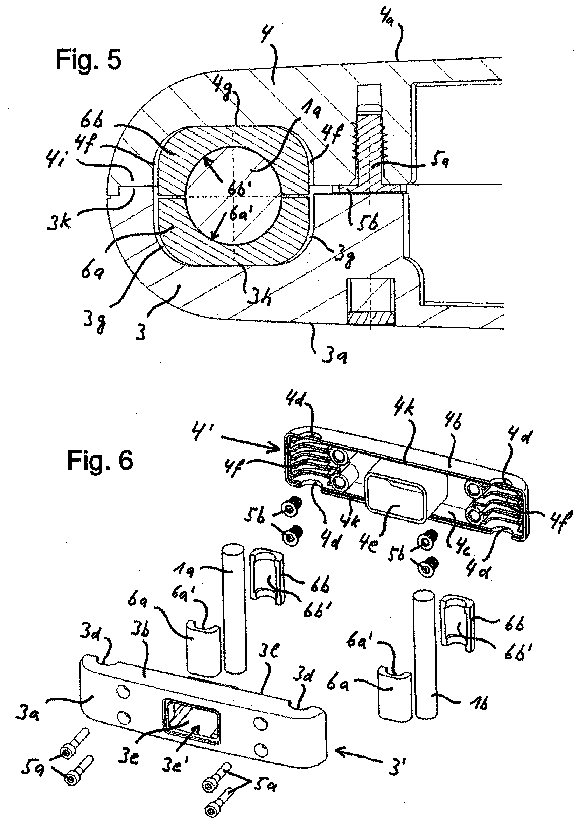

Die gegen die Kopfstützenstangen 1a, 1b gerichteten Gleitflächen 6a', 6b' der Gleitelemente 6a, 6b weisen einen halbkreisförmigen Querschnitt auf und berühren die Kopfstützenstangen 1a, 1b auf dem halben Umfang, so dass die Gleitflächen 6a', 6b' von jeweils zwei gegeneinander gerichteten Gleitelementen 6a, 6b die Kopfstützenstangen 1a, 1b gemeinsam rohrförmig umschliessen (Fig. 5).

Die Breite der Aufnahmen 3g, 4f ist etwas grösser als die Breite der Gleitelemente 6a, 6b, so dass sich diese an den Längsführungen 3h, 4g geführt parallel zu einer horizontalen Verbindungslinie zwischen den Kopfstützenstangen 1a, 1b seitlich bewegen und so ein Spiel beim Abstand der Kopfstützenstangen 1a, 1b ausgleichen können.

An den Befestigungselementen 3, 4 sind zwischen der Aufnahmebuchse 3e und den Aufnahmen 3g, 4f für die Gleitelemente 6a, 6b Schraubverbindungen 5a, 5b vorgesehen mit denen das erste und das zweite Befestigungselement 3, 4 verschraubt werden können. Anstelle von Schraubverbindungen 5a, 5b sind auch Rast-, Schnapp- oder Klickverbindungen dankbar.

An den beiden Befestigungselementen 3, 4 sind beidseitig Anschläge 3k, 4i (Fig. 5) angeordnet, welche das erste und das zweite Befestigungselemente 3, 4 beim Verschrauben so gegeneinander abstützen, dass keine Kräfte der Verschraubung auf die Gleitelemente 6a, 6b übertragen werden, die den Lauf der Gleitelemente 6a, 6b auf den Kopfstützenstangen 1a, 1b blockieren könnten.

Fig. 3, 4 und 6 zeigen eine weitere Ausführungsform der Befestigungseinrichtung bei der das erste und das zweite Befestigungselement 3, 4 als längliche im Wesentlichen symmetrische Halbschalen 3', 4' ausgebildet sind deren offenen Seiten gegeneinander gerichtet sind und die gemeinsam einen länglichen Hohlkörper in etwa in Form eines rechtwinkligen Parallelepipeds bilden.

Die Aufnahmen 3g, 4f für die Gleitelemente 6a, 6b sowie die Dome mit den Einsätzen 5b für die Verschraubung sind auf der Innenseite der beiden Halbschalen 3', 4' angeordnet

Die Aufnahmebuchse 3e ist auf der Innenseite der ersten Halbschale 3' angeordnet und die kastenförmige Abstützung 4e zum Abstützen der Aufnahmebuchse 3e ist auf der Innenseite der zweiten Halbschale 4' angeordnet (Fig. 3).

Die gegeneinander gerichteten Stirnkanten 3l, 4k der verschraubten Halbschalen 3', 4 'stossen fluchtend aufeinander, wobei auf den Ober- und Unterseiten 3b, 3c, 4b, 4c der Halbschalen 3', 4' Stangenausnehmungen 3d, 4d für die Kopfstützenstangen 1a, 1b freigespart sind.

## Patentansprüche

1. Befestigungseinrichtung zum lösbaren Anbringen einer Vorrichtung an zwei beabstandeten Kopfstützenstangen (1a, 1b) eines Kraftfahrzeugsitzes (1), mit einer Aufnahmebuchse (3e) zur Aufnahme eines an der Vorrichtung (2) angeordneten Steckelements (2a), sowie
mit einem ersten und einem zweiten Befestigungselement (3, 3', 4, 4'), mit denen die Aufnahmebuchse (3e) an den Kopfstützenstangen (1a, 1b) befestigbar ist,
wobei das erste und das zweite Befestigungselement (3, 3', 4, 4') an gegenüberliegenden Seiten ausgebildet sind und zur Anordnung an den Kopfstützenstangen (1a, 1b) ausgelegt sind und
wobei Verbindungsmittel (5, 5a, 5b) zur gegenseitigen Verbindung der Befestigungselemente (3, 3', 4, 4') vorgesehen sind , **dadurch gekennzeichnet, dass** zwischen den Befestigungselementen (3, 3', 4, 4') und den Kopfstützenstangen (1a, 1b) Gleitelemente (6a, 6b) angeordnet sind und dass die Gleitelemente (6a, 6b) als separate Bauteile ausgebildet und in die Befestigungselemente (3, 3', 4, 4') eingesetzt sind und dass die beiden Befestigungselemente (3, 4) als längliche, im Wesentlichen symmetrische Halbschalen (3', 4') ausgebildet sind, deren offenen Seiten gegeneinander gerichtet sind und die gemeinsam einen länglichen Hohlkörper bilden.

2. Befestigungseinrichtung nach Anspruch 1, **dadurch gekennzeichnet, dass** sich die beiden Befestigungselemente (3, 3', 4, 4') derart ausgebildet sind, dass sie sich über die Kopfstützenstangen (1a, 1b) hinaus erstrecken und dass an jedem Befestigungselement (3, 3', 4, 4') zwei Gleitelemente (6a, 6b) angeordnet sind.

3. Befestigungseinrichtung nach Anspruch 1 oder 2, **dadurch gekennzeichnet, dass** die gegen die Kopfstützenstangen (1a, 1b) gerichteten Gleitflächen (6a', 6b') der Gleitelemente (6a, 6b) die Kopfstützenstangen (1a, 1b) abschnittsweise und vorzugsweise in etwa hälftig umgreifen.

4. Befestigungseinrichtung nach Anspruch 3, **dadurch gekennzeichnet, dass** die Gleitflächen (6a', 6b') der Gleitelemente (6a, 6b) einen kreissegmentförmigen oder halbkreisförmigen Querschnitt aufweisen.

5. Befestigungseinrichtung nach Anspruch 3 oder 4, **dadurch gekennzeichnet, dass** die Gleitflächen (6a', 6b') von jeweils zwei gegeneinander gerichteten Gleitelementen(6a, 6b) die Kopfstützenstangen (1a, 1b) gemeinsam rohrförmig umschließen.

6. Befestigungseinrichtung nach einem der Ansprüche 1 bis 5, **dadurch gekennzeichnet, dass** die Gleitelemente (6a, 6b) zur Anpassung an unterschiedliche Abstände der Kopfstützenstangen (1a, 1b) parallel zu einer horizontalen Verbindungslinie zwischen den beiden Kopfstützenstangen (1a,1b) beweglich in den Befestigungselementen (3, 3', 4, 4') gelagert sind.

7. Befestigungseinrichtung nach Anspruch 6, **dadurch gekennzeichnet, dass** die Gleitelemente (6a, 6b) in Längsführungen (3h, 4g) in den Befestigungselementen (3, 3', 4, 4') geführt sind.

8. Befestigungseinrichtung nach einem der Ansprüche 1 bis 7, **dadurch gekennzeichnet, dass** die Verbindungsmittel (5) von Schraubverbindungen (5a, 5b) gebildet sind, die vorzugsweise zwischen der Aufnahmebuchse (3e) und den Gleitelementen (6a, 6b) angeordnet sind.

9. Befestigungseinrichtung nach einem der vorhergehenden Ansprüche, **dadurch gekennzeichnet, dass** die Befestigungselemente (3, 3', 4, 4') Anschläge (3k, 4i) vorsehen, welche die beiden Befestigungselementen (3, 3', 4, 4') bei an den Kopfstützenstangen (1a, 1b) angeordneten Befestigungselementen (3, 3', 4, 4') gegeneinander abstützen, wobei die Befestigungselemente (3, 3', 4, 4') gegen die Gleitelemente (6a, 6b) so einwirken, dass der Lauf der Gleitelemente (6a, 6b) auf den Kopfstützenstangen (1a, 1b) nicht blockiert ist.

10. Befestigungseinrichtung nach Anspruch 9, **dadurch gekennzeichnet, dass** auf den Innenseiten der beiden Halbschalen (3', 4') Aufnahmen (3g, 4f) für die Gleitelemente (6a, 6b) vorgesehen sind.

11. Befestigungseinrichtung nach Anspruch 9 oder 10, **dadurch gekennzeichnet, dass** die gegeneinander gerichteten Stirnkanten (3l, 4k) der beiden Halbschalen (3', 4') fluchtend aufeinander stoßen, wobei auf den Ober- und Unterseiten (3b, 3c, 4b, 4c) der Halbschalen (3', 4') Stangenausnehmungen (3d, 4d) für die Kopfstützenstangen (1a, 1b) freigespart sind.

12. Befestigungseinrichtung nach einem der Ansprüche 9 bis 11, **dadurch gekennzeichnet, dass** die Aufnahmebuchse (3e) auf der Innenseite der ersten Halbschale (3') angeordnet ist und auf der Innenseite der zweiten Halbschale (4') eine kastenförmige Abstützung (4e) zum Abstützen der Aufnahmebuchse (3e) vorgesehen ist.

13. Befestigungseinrichtung nach einem der Ansprüche 1 bis 12, **dadurch gekennzeichnet, dass** ein, vorzugsweise seitlich verschiebbarer und federvorgespannter, Verschlussschieber (3f) vorgesehen ist, der die an der Frontseite (3a) der ersten Halbschale (3') angeordnete Einstecköffnung (3e') der Aufnahmebuchse (3e) verschließt, wenn kein Steckelement (2a) in die Aufnahmebuchse (3e) eingesteckt ist.

## Claims

1. A securing device for removably attaching a device to two mutually spaced apart head support rods (1a, 1b) of a motor vehicle seat (1), with a receiving bushing (3e) for receiving a plug element (2a) arranged on the device (2), and with a first and a second securing element (3, 3', 4, 4') with which the receiving bushing (3e) can be secured on the head support rods (1a, 1b),
wherein the first and the second securing element (3, 3', 4, 4') are formed on opposite sides and are configured for to be arranged on the head support rods (1a, 1b), and wherein connecting means (5, 5a, 5b) are provided for reciprocally connecting the securing elements (3, 3', 4, 4'), **characterized in that** sliding elements (6a, 6b) are arranged between the securing elements (3, 3', 4, 4') and the head support rods (1a, 1b) and **in that** the sliding elements (6a, 6b) are designed as separate components and are inserted into the securing elements (3, 3', 4, 4') and **in that** the two securing elements (3, 4) are designed as elongate, substantially symmetrical half shells (3', 4'), open sides of which are directed toward each other and which jointly form an elongate hollow body.

2. The securing device as claimed in claim 1, **characterized in that** the two securing elements (3, 3', 4, 4') are configured such that they extend beyond the head support rods (1a, 1b) and **in that** two sliding elements (6a, 6b) are arranged on each of the securing elements (3, 3', 4, 4').

3. The securing device as claimed in claim 1 or 2, **characterized in that** the sliding surfaces (6a', 6b') of the sliding elements (6a, 6b), which sliding surfaces are directed toward the head support rods (1a, 1b), engage around the head support rods (1a, 1b) in sections and preferably by approximately half.

4. The securing device as claimed in claim 3, **characterized in that** the sliding surfaces (6a', 6b') of the sliding elements (6a, 6b) have a circular-segment-shaped or semicircular cross section.

5. The securing device as claimed in claim 3 or 4, **characterized in that** the sliding surfaces (6a', 6b') of in each case two sliding elements (6a, 6b) which are directed toward each other jointly surround the head support rods (1a, 1b) in a tubular manner.

6. The securing device as claimed in one of claims 1 to 5, **characterized in that**, for adaptation to different distances between the head support rods (1a, 1b), the sliding elements (6a, 6b) are mounted in the securing elements (3, 3', 4, 4') so as to be movable parallel to a horizontal connecting line between the two head support rods (1a, 1b).

7. The securing device as claimed in claim 6, **characterized in that** the sliding elements (6a, 6b) are guided in longitudinal guides (3h, 4g) in the securing elements (3, 3', 4, 4').

8. The securing device as claimed in one of claims 1 to 7, **characterized in that** the connecting means (5) are formed by screw connections (5a, 5b) which are preferably arranged between the receiving bushing (3e) and the sliding elements (6a, 6b).

9. The securing device as claimed in one of the preceding claims, **characterized in that** the securing elements (3, 3', 4, 4') provide stops (3k, 4i) which support the two securing elements (3, 3', 4, 4') against each other when securing elements (3, 3', 4, 4') are arranged on the head support rods (1a, 1b), wherein the securing elements (3, 3', 4, 4') act against the sliding elements (6a, 6b) in such a manner that running of the sliding elements (6a, 6b) on the head support rods (1a, 1b) is not blocked.

10. The securing device as claimed in claim 9, **characterized in that** receptacles (3g, 4f) for the sliding elements (6a, 6b) are provided on inner sides of the two half shells (3', 4').

11. The securing device as claimed in claim 9 or 10, **characterized in that** end edges (31, 4k), which are directed toward each other, of the two half shells (3', 4') abut in alignment against each other, wherein rod recesses (3d, 4d) for the head support rods (1a, 1b) are left open on the upper and lower sides (3b, 3c, 4b, 4c) of the half shells (3', 4').

12. The securing device as claimed in one of claims 9 to 11, **characterized in that** the receiving bushing (3e) is arranged on the inner side of the first half shell (3') and a box-shaped support (4e) for supporting the receiving bushing (3e) is provided on the inner side of the second half shell (4').

13. The securing device as claimed in one of claims 1 to 12, **characterized in that** a preferably laterally displaceable and spring-prestressed closure slide (3f) is provided which closes a plug-in opening (3e') in the receiving bushing (3e), which plug-in opening is arranged on the front side (3a) of the first half shell (3'), if no plug element (2a) is plugged into the receiving bushing (3e).

## Revendications

1. Dispositif de fixation destiné à la fixation amovible d'un dispositif sur deux tiges d'appui-tête (1a, 1b) espacées l'une de l'autre d'un siège (1) de véhicule automobile, comprenant une douille de réception (3e) destinée à recevoir un élément mâle (2a) disposé sur le dispositif (2), ainsi que
des premier et deuxième éléments de fixation (3, 3', 4, 4') au moyen desquels ladite douille de réception (3e) peut être fixée sur les tiges d'appui-tête (1a, 1b), lesdits premier et deuxième éléments de fixation (3, 3', 4, 4') étant réalisés sur des côtés opposés et étant conçus pour être disposés sur les tiges d'appui-tête (1a, 1b), et
dans lequel des moyens de liaison (5, 5a, 5b) destinés à la liaison mutuelle des éléments de fixation (3, 3', 4, 4') sont prévus, **caractérisé par le fait que** des éléments de glissement (6a, 6b) sont disposés entre les éléments de fixation (3, 3', 4, 4') et les tiges d'appui-tête (1a, 1b), et que lesdits éléments de glissement (6a, 6b) sont réalisés en tant que composants séparés et sont insérés dans les éléments de fixation (3, 3', 4, 4'), et que les deux éléments de fixation (3, 4) sont réalisés en tant que demi-coques (3', 4') allongées pour l'essentiel symétriques dont les faces ouvertes sont orientées l'une contre l'autre et qui forment ensemble un corps creux allongé.

2. Dispositif de fixation selon la revendication 1, **caractérisé par le fait que** les deux éléments de fixation (3, 3', 4, 4') sont réalisés de telle sorte qu'ils s'étendent au-delà des tiges d'appui-tête (1a, 1b), et que sur chaque élément de fixation (3, 3', 4, 4') sont disposés deux éléments de glissement (6a, 6b).

3. Dispositif de fixation selon la revendication 1 ou 2, **caractérisé par le fait que** les surfaces de glissement (6a', 6b') des éléments de glissement (6a, 6b), qui sont orientées contre les tiges d'appui-tête (1a, 1b), s'étendent par sections et de préférence à peu près par moitié autour des tiges d'appui-tête (1a, 1b).

4. Dispositif de fixation selon la revendication 3, **caractérisé par le fait que** les surfaces de glissement (6a', 6b') des éléments de glissement (6a, 6b) présentent une section transversale en forme de segment de cercle ou demi-circulaire.

5. Dispositif de fixation selon la revendication 3 ou 4, **caractérisé par le fait que** les surfaces de glissement (6a', 6b') de respectivement deux éléments de glissement (6a, 6b) orientés l'un contre l'autre entourent ensemble de manière tubulaire lesdites tiges d'appui-tête (1a, 1b).

6. Dispositif de fixation selon l'une quelconque des revendications 1 à 5, **caractérisé par le fait que**, pour l'adaptation à des distances différentes des tiges d'appui-tête (1a, 1b), les éléments de glissement (6a, 6b) sont logés de manière mobile dans les éléments de fixation (3, 3', 4, 4'), parallèlement à une ligne horizontale de liaison entre les deux tiges d'appui-tête (1a, 1b).

7. Dispositif de fixation selon la revendication 6, **caractérisé par le fait que** les éléments de glissement (6a, 6b) sont guidés dans des guides longitudinaux (3h, 4g) dans les éléments de fixation (3, 3', 4, 4').

8. Dispositif de fixation selon l'une quelconque des revendications 1 à 7, **caractérisé par le fait que** les moyens de liaison (5) sont formés de vissages (5a, 5b) qui, de préférence, sont disposés entre ladite douille de réception (3e) et les éléments de glissement (6a, 6b).

9. Dispositif de fixation selon l'une quelconque des revendications précédentes, **caractérisé par le fait que** les éléments de fixation (3, 3', 4, 4') prévoient des butées (3k, 4i) qui appuient l'un contre l'autre les deux éléments de fixation (3, 3', 4, 4') lorsque les éléments de fixation (3, 3', 4, 4') sont disposés sur les tiges d'appui-tête (1a, 1b), dans lequel les éléments de fixation (3, 3', 4, 4') agissent de telle manière contre les éléments de glissement (6a, 6b) que la marche des éléments de glissement (6a, 6b) sur les tiges d'appui-tête (1a, 1b) ne soit pas bloquée.

10. Dispositif de fixation selon la revendication 9, **caractérisé par le fait que** des logements (3g, 4f) pour les éléments de glissement (6a, 6b) sont prévus sur les faces intérieures des deux demi-coques (3', 4').

11. Dispositif de fixation selon la revendication 9 ou 10, **caractérisé par le fait que** les arêtes frontales (31, 4k) orientées l'une contre l'autre des deux demi-coques (3', 4') se rencontrent de manière à être à fleur, dans lequel des évidements de tige (3d, 4d) pour les tiges d'appui-tête (1a, 1b) sont ménagés sur les faces supérieure et inférieure (3b, 3c, 4b, 4c) des demi-coques (3', 4').

12. Dispositif de fixation selon l'une quelconque des revendications 9 à 11, **caractérisé par le fait que** ladite douille de réception (3e) est disposée sur la face intérieure de la première demi-coque (3'), et que sur la face intérieure de la deuxième demi-coque (4') est prévu un appui (4a) en forme de caisse destiné à appuyer la douille de réception (3e).

13. Dispositif de fixation selon l'une quelconque des revendications 1 à 12, **caractérisé par le fait qu'**un coulisseau de fermeture (3f) de préférence latéralement déplaçable et précontraint par ressort est prévu qui ferme l'ouverture d'introduction (3e') de la douille de réception (3e), qui est disposée sur la face frontale (3a) de la première demi-coque (3'), lorsqu'aucun élément mâle (2a) est introduit dans la douille de réception (3e) .
